# EUROPEAN PATENT APPLICATION

(11) **EP 4 751 543 A1**
(43) Date of publication of application: **03.06.2026**
(21) Application number: 25213528.0
(22) Date of filing: 05.11.2025
(51) Int. Cl.: A01D 34/00, A01D 34/66, A01D 34/82, B62D 1/12

(54) **MANNED MOWER COMPRISING HANDLES WITH A DISPLAY ASSEMBLY AND AN OPERATING ASSEMBLY**

(30) Priority: 28.11.2024 CN 202411732290; 28.11.2024 CN 202422927952 U
(71) Applicant: Nanjing Chervon Industry Co., Ltd., Nanjing, Jiangsu 211106 (CN)
(72) Inventor: LU, Wei, Nanjing (CN); LAI, Xiangren, Nanjing (CN); XIE, Chenwei, Nanjing (CN)
(74) Representative: Sun, Yiming

(57) **Abstract**

The present invention relates to a manned mower (100) including an operating mechanism (30). The operating mechanism includes a first operating lever (31, 51) and a second operating lever (32, 52). The first operating lever and the second operating lever are operable to control a first drive wheel (411R) and a second drive wheel (411L), respectively. Each of the first operating lever and the second operating lever is provided with a handle portion (311, 511). The operating mechanism further includes a display assembly (33, 53) and an operating assembly (34, 54). The display assembly (33, 53) is at least disposed on the handle portion (311) of the first operating lever (31) and is configured to display at least the operation state of the manned mower. The operating assembly (34, 54) is operated to enable a controller to receive an operation instruction and is at least disposed on the first or second operating lever.

## Description

### TECHNICAL FIELD

The present application relates to an outdoor work vehicle and, in particular, to a manned mower and an outdoor traveling device.

### BACKGROUND

Outdoor traveling devices are used for outdoor operation, such as a utility vehicle (UTV), an agricultural machinery vehicle, a farmer's vehicle, a dune buggy, a golf cart, and a mower. The operating member is used to control the outdoor traveling device to move forward, move backward, or turn. In the related art, when the user operates the operating member with two hands, if the user needs to confirm the device parameters of the outdoor traveling device, the user needs to lower the head to observe the master control display screen. Moreover, if the user needs to adjust the device parameters, the user needs to release the hands holding the operating member to perform the adjustment.

This part provides background information related to the present application, and the background information is not necessarily the existing art.

### SUMMARY

The present application aims to solve or at least alleviate part or all of the preceding problems. Therefore, the present application provides a string trimmer. The present application adopts the technical solutions below.

In an example, a manned mower is provided. The manned mower includes a vehicle frame; a traveling mechanism mounted to the vehicle frame and including a first drive wheel and a second drive wheel; a mowing assembly including a mowing blade and connected to the vehicle frame; a controller for controlling at least the traveling mechanism; and an operating mechanism including a first operating lever and a second operating lever, where the first operating lever and the second operating lever are operable to control the first drive wheel and the second drive wheel, respectively, and each of the first operating lever and the second operating lever is provided with a handle portion. The operating mechanism further includes a display assembly and an operating assembly, the display assembly is at least disposed on the handle portion of the first operating lever and configured to display at least the operation state of the manned mower, the operating assembly is operated to enable the controller to receive an operation instruction from a user, and the operating assembly is at least disposed on the first operating lever or the second operating lever.

In some examples, the manned mower further includes a master control display screen including a master control display interface that displays at least the working state of the manned mower; and a master control switch assembly used for controlling at least the working state of the manned mower when the master control switch assembly is operated. The master control display screen and the master control switch assembly are disposed on the vehicle frame and are independent of the operating mechanism.

In some examples, the control functions of the operating assembly and the control functions of the master control switch assembly are at least partially the same.

In some examples, the master control display screen responds to the operation instruction of the operating assembly to display corresponding information on the master control display interface.

In some examples, the first operating lever includes a first end adjacent to the traveling mechanism and a second end opposite to the first end, the handle portion is disposed near the second end, and the display assembly is disposed at an end portion of the second end.

In some examples, the operating assembly is disposed at the second end.

In some examples, the operating assembly is disposed on the outer peripheral side of the display assembly.

In some examples, the manned mower further includes a second controller, where the display assembly and the operating assembly are separately connected to the second controller, and the second controller is connected to the controller.

In some examples, the second controller is disposed in the first operating lever, and the second controller is connected to the controller via a cable.

In some examples, the cable passes through the first operating lever to connect the second controller to the controller.

In some examples, the manned mower further includes a support mechanism for supporting the user, where the support mechanism is mounted on the vehicle frame, and the display assembly is disposed in front of and/or above the support mechanism.

In some examples, the display assembly includes a first display screen, and the dimension of the first display screen is greater than or equal to 1.5 inches.

In some examples, the first operating lever further includes a display housing for accommodating the first display screen, the display housing is formed on or connected to the first operating lever, and the edge of the display housing protrudes from the handle portion in the radial direction of the handle portion.

In some examples, the display housing includes a first housing and a second housing that are separated in the front and rear direction.

In some examples, the first operating lever and the second operating lever independently control the steering of the first drive wheel and the second drive wheel, respectively.

In an example, an outdoor traveling device is provided. The outdoor traveling device includes a vehicle frame; a traveling mechanism mounted to the vehicle frame and including a first drive wheel and a second drive wheel; a controller for controlling at least the traveling mechanism; and an operating mechanism including a first operating lever and a second operating lever, where the first operating lever and the second operating lever are operably connected to the first drive wheel and the second drive wheel, respectively, and each of the first operating lever and the second operating lever is provided with a handle portion. The operating mechanism further includes a display assembly configured to display at least the operation state of the outdoor traveling device, the display assembly is at least disposed on the handle portion of the first operating lever, the display assembly includes a first display screen, and the dimension of the first display screen is greater than or equal to 1.5 inches.

In an example, an outdoor traveling device is provided. The outdoor traveling device includes a vehicle frame; a traveling mechanism mounted to the vehicle frame and including a first drive wheel and a second drive wheel; a controller for controlling at least the traveling mechanism; and an operating mechanism including a first operating lever and a second operating lever, where the first operating lever and the second operating lever are operably connected to the first drive wheel and the second drive wheel, respectively, and each of the first operating lever and the second operating lever is provided with a handle portion. The operating mechanism further includes a display assembly and an operating assembly, the display assembly is configured to display at least the operation state of the outdoor traveling device, the display assembly is at least disposed on the handle portion of the first operating lever, the display assembly includes a first display screen, the dimension of the first display screen is greater than or equal to 1.5 inches, the operating assembly is operated to enable the controller to receive an operation instruction from a user, and the operating assembly is at least disposed on the first operating lever or the second operating lever.

In some examples, the operating assembly is at least disposed on the outer peripheral side of the first display screen.

In some examples, the first operating lever further includes a display housing for accommodating the first display screen, the display housing is formed on or connected to the first operating lever, and the edge of the display housing protrudes from the handle portion in the radial direction of the handle portion.

In some examples, the outdoor traveling device further includes a master control display screen including a master control display interface that is capable of displaying at least the working state of the outdoor traveling device; and a master control switch assembly capable of at least waking up the master control display interface to enter a startup interface when operated by the user. The master control display screen and the master control switch assembly are disposed on the vehicle frame and are separated from the operating mechanism.

### BRIEF DESCRIPTION OF DRAWINGS

FIG. 1 is a structural view of an outdoor traveling device according to an example of the present application.
FIG. 2 is a schematic view of some structures of an outdoor traveling device according to an example of the present application, mainly illustrating a traveling mechanism and a first circuit board.
FIG. 3 is a schematic view of some structures of an outdoor traveling device according to an example of the present application, mainly illustrating battery packs.
FIG. 4 is a structural view of an operating mechanism of an outdoor traveling device according to an example of the present application.
FIG. 5 is a structural view of an operating mechanism of an outdoor traveling device according to an example of the present application from another perspective.
FIG. 6 is a structural view of some structures in FIG. 4, mainly illustrating a display assembly and an operating assembly.
FIG. 7 is a sectional view of FIG. 6.
FIG. 8 is a structural view of another operating mechanism of an outdoor traveling device according to an example of the present application.
FIG. 9 is a structural view of another operating mechanism of an outdoor traveling device according to an example of the present application from another perspective.
FIG. 10A is a sectional view taken along B-B in FIG. 9.
FIG. 10B is a sectional view taken along C-C in FIG. 9.
FIG. 11 is a structural view of a master control console and a first storage box of an outdoor traveling device according to an example of the present application.
FIG. 12 is a structural view of the first storage box in FIG. 11 with a box cover closed.
FIG. 13 is a schematic view of a "standby" interface of a master control display screen in an outdoor traveling device according to an example of the present application.
FIG. 14 is a schematic view of a "homepage" interface of a master control display screen in an outdoor traveling device according to an example of the present application.
FIG. 15 is a schematic view of a "power information interface" of a master control display screen in an outdoor traveling device according to an example of the present application.
FIG. 16 is a schematic view of an "operation history interface" of a master control display screen in an outdoor traveling device according to an example of the present application.
FIG. 17 is a schematic view of a "machine state interface" of a master control display screen in an outdoor traveling device according to an example of the present application.
FIG. 18 is a schematic view of a "charging interface" of a master control display screen in an outdoor traveling device according to an example of the present application.
FIG. 19 is a schematic view of a "startup-condition-not-satisfied interface" of a master control display screen in an outdoor traveling device according to an example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

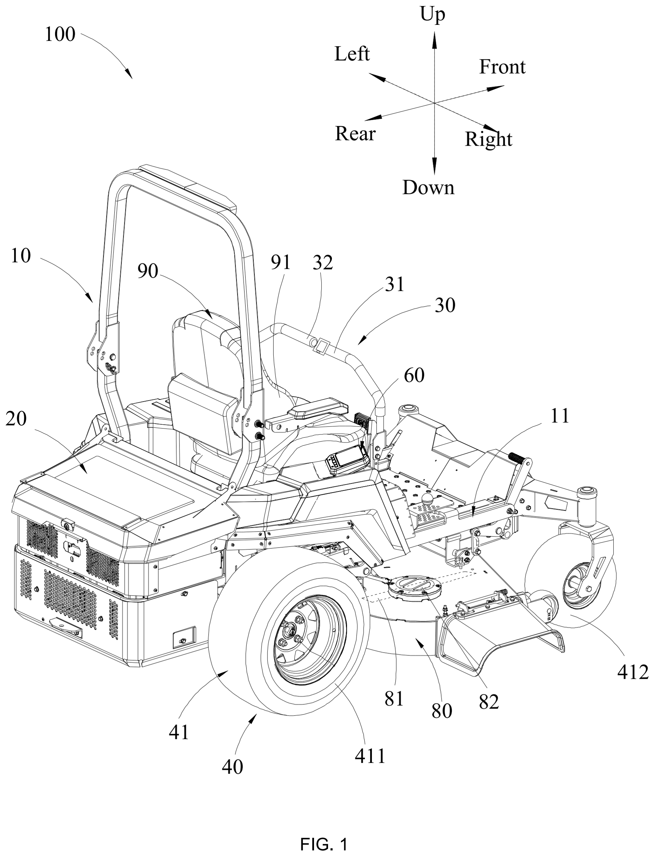

As shown in FIG. 1, the user may sit or stand on an outdoor traveling device 100 disclosed in the present application to operate the outdoor traveling device 100. For example, the outdoor traveling device 100 may be a manned mower for trimming lawns and other vegetation. The outdoor traveling device 100 may be a UTV. In the related art, the UTV includes a four-wheel all-terrain vehicle (ATV), a multi-purpose ATV, and a go-kart. The outdoor traveling device 100 may be a manned snow thrower or an electric motorcycle. The directions of front, rear, left, right, up, and down are described as the directions shown in FIG. 1. Specifically, when the user rides or stands on the outdoor traveling device 100 on the ground, it is defined that the direction which the user faces is front, the direction which the user faces away from is rear, the direction on the left-hand side of the user is left, the direction on the right-hand side of the user is right, the direction toward the ground is down, and the direction away from the ground is up.

As shown in FIGS. 1 to 3, in this example, the case where the outdoor traveling device 100 is a manned working machine is used as an example. The outdoor traveling device 100 includes a vehicle body 10 and a power supply mechanism 20.

The vehicle body 10 includes a vehicle frame 11, a traveling mechanism 40, an operating mechanism 30, a support mechanism 90, and a mowing assembly 80. The vehicle frame 11 extends basically along the front and rear direction and is used for mounting the traveling mechanism 40, the operating mechanism 30, the support mechanism 90, and the mowing assembly 80.

The support mechanism 90 is used for supporting an operator, and the support mechanism 90 is mounted on the vehicle body 10. Optionally, the support mechanism 90 includes a seat 91. The seat 91 is mounted to the vehicle frame 11 and used for the user to sit on. In other alternative examples, the support mechanism 90 includes a platform for the user to stand on.

As shown in FIG. 1, the mowing assembly 80 includes a mowing blade 81 and a mowing motor 82 for driving the mowing blade 81. The mowing blade 81 is generally replaceable and available in a variety of dimensions. Of course, in some examples, the mowing assembly 80 may not be provided, for example, when the outdoor traveling device is an ATV. In some examples, the mowing assembly 80 may not be provided, but other working attachments such as a snow shovel may be provided.

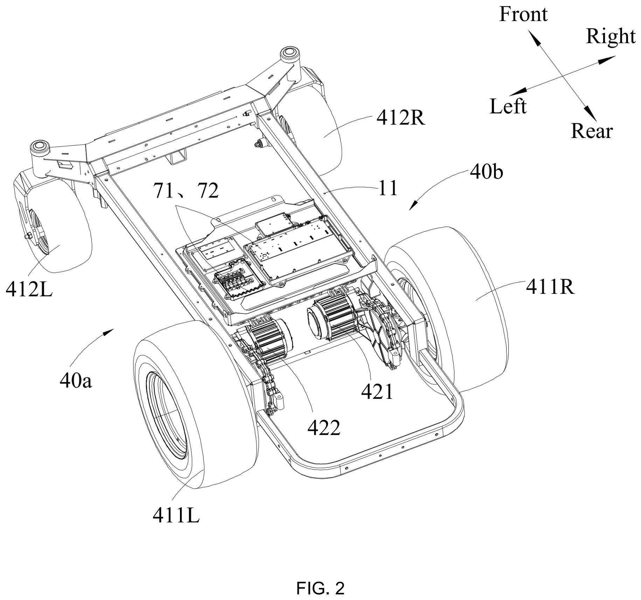

In this example, the traveling mechanism 40 includes traveling wheels and a traveling motor for driving the traveling wheels to rotate. In some examples, the traveling mechanism 40 includes components such as a traveling track that drives a manned mower 100 to travel. In this example, the traveling wheels include rear traveling wheels 411 and front traveling wheels 412. As shown in FIG. 2, the rear traveling wheels 411 include a left rear traveling wheel 411L and a right rear traveling wheel 411R. The front traveling wheels 412 include a left front traveling wheel 412L and a right front traveling wheel 412R. The traveling motor drives the rear traveling wheels 411 or the front traveling wheels 412 to rotate, thereby implementing the traveling function of the manned mower 100. Optionally, one, two, three, or four traveling motors may be provided. For example, the traveling mechanism 40 includes a first drive wheel and a second drive wheel for providing driving forces. In this example, the first drive wheel is the right rear traveling wheel 411R, and the second drive wheel is the left rear traveling wheel 411L. The traveling motors include a first traveling motor 421 for providing a driving force for the right rear traveling wheel 411R and a second traveling motor 422 for providing a driving force for the left rear traveling wheel 411L. For convenience of reference, in the subsequent description, the first drive wheel 411R is referred to as the right rear traveling wheel, and the second drive wheel 411L is referred to as the left rear traveling wheel. The traveling mechanism 40 provides driving forces to the first drive wheel 411R and the second drive wheel 411L in an independent driving manner.

In an example, the operating mechanism 30 includes a first operating lever 31 and a second operating lever 32. The first operating lever 31 and the second operating lever 32 are operated by the user and indicate desired operations of the user to control the manned mower 100 to move forward, move backward, and turn. For example, the first operating lever 31 can be held by the right hand of the user and may also be considered as a right operating lever, and the second operating lever 32 can be held by the left hand of the user and may also be considered as a left operating lever. The manned mower 100 of the present application is provided with two operating levers, which are the left operating lever and the right operating lever, and the steering speed and straight-line speed of the outdoor traveling device 100 are controlled according to the tilting angles of the left operating lever and the right operating lever. For example, the angles of rotation of the first operating lever 31 and the second operating lever 32 are positively correlated with the traveling speeds. The angle of rotation refers to the angle between the initial position and the current position of the operating lever. When the first operating lever 31 and the second operating lever 32 are at the initial positions, the traveling speed of the traveling mechanism 40 is zero. When the positions of the first operating lever 31 and the second operating lever 32 are at the extreme positions (in this case, the angles of rotation are the largest), the traveling speed of the traveling mechanism 40 is the maximum value corresponding to the current traveling speed gear. The traveling direction of the outdoor traveling device 100 is adjusted by making a difference in the angles of rotation of the first operating lever 31 and the second operating lever 32.

For example, the first operating lever 31 is connected to the first drive wheel 411R, and the second operating lever 32 is connected to the second drive wheel 411L. For example, the first operating lever 31 is coupled to the first traveling motor 421, and the second operating lever 32 is coupled to the second traveling motor 422. The first operating lever 31 and the second operating lever 32 independently control the movement of the first drive wheel 411R and the second drive wheel 411L. Optionally, the first operating lever 31 and the second operating lever 32 independently input driving requirements to the first traveling motor 421 and the second traveling motor 422, respectively.

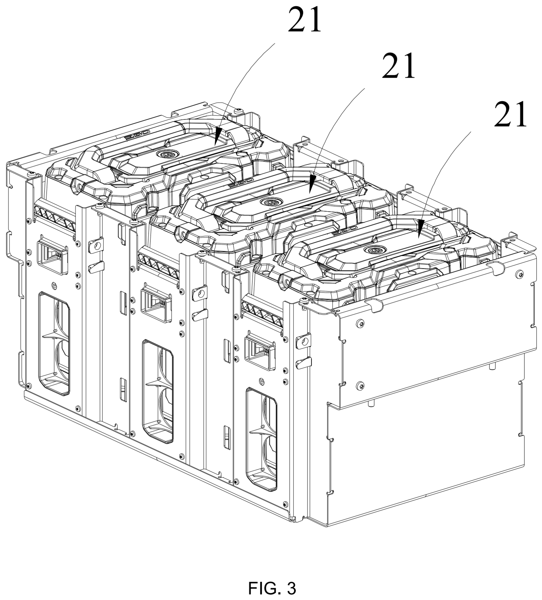

As shown in FIG. 3, the power supply mechanism 20 supplies energy to at least the traveling mechanism 40 so that the outdoor traveling device 100 can be used as a power tool capable of carrying people. The electric outdoor traveling device 100 is more environmentally friendly and more energy-efficient than a fuel-based outdoor traveling device 100. In this example, the power supply mechanism 20 is a direct current power supply, such as battery packs 21. The battery packs 21 mate with the corresponding power circuit to supply power to at least the traveling motors 421 and 422 and the mowing motor 82.

In this example, a controller 71 for controlling at least the traveling mechanism 40 is further included. For convenience of reference, the controller 71 is defined as a first controller 71, and the first controller 71 controls at least the traveling mechanism 40. The first controller 71 includes a processor and a memory. The processor may be a microcontroller unit (MCU), an Advanced reduced instruction set computer (RISC) Machine (ARM), or a single-chip microcomputer, each of which is configured to be programmably controlled to implement the corresponding function. The memory may store programs to be executed and related data. The first controller 71 is disposed on a first circuit board 72. For example, the first circuit board 72 includes a printed circuit board (PCB) or a flexible printed circuit (FPC) board. The first circuit board 72 is disposed on the vehicle frame 11. For example, the first circuit board 72 is disposed below the seat 91, thereby saving space and making the structure of the whole machine more compact.

As shown in FIG. 1 and FIGS. 3 to 7, the operating mechanism 30 further includes a display assembly 33 and an operating assembly 34. The display assembly 33 is at least disposed on the first operating lever 31. The display assembly 33 is configured to display at least the operation state of the outdoor traveling device 100. The operation state of the outdoor traveling device 100 is represented by device parameters, component state, and fault information of the outdoor traveling device 100. The operating assembly 34 is operated so that the first controller 71 receives the operation instruction from the user. The operating assembly 34 is at least disposed on the first operating lever 31 or the second operating lever 32. The user can adjust the parameters of the outdoor traveling device without releasing the operating lever, which is safe and convenient.

As shown in FIGS. 3 to 7, the first operating lever 31 is used as an example. The first operating lever 31 includes a handle portion 311 configured to be held by the user's hand. The first operating lever 31 further includes a steering lever 312 configured to be movably connected to the vehicle frame 11 or the traveling mechanism 40. The steering lever 312 and the vehicle frame 11 or the traveling mechanism 40 may be welded, bolted, and/or attached to one another in other manners, and the steering lever 312 is operably connected to the drive wheel (for example, the first drive wheel 411R) of the outdoor traveling device 100 to provide steering input to the wheel. For example, the first operating lever 31 includes a first end 31a adjacent to the traveling mechanism 40 and a second end 31b disposed in an opposite end to the first end 31a. In this example, the first end 31a is configured to be connected to the vehicle frame 11 or the traveling mechanism 40, and the second end 31b of the first operating lever 31 and a second end 32b of the second operating lever 32 face each other. It is to be understood that the second ends 31b and 32b are free ends. The handle portion 311 is disposed near the second end 31b.

In this example, the handle portion 311 at least partially extends to the front and/or the above of the support mechanism 90. For example, in the case where the support mechanism 90 is the seat 91, when the user is ready to travel, the handle portion 311 extends at least to the above of the seat 91, and the handle portion 311 is in front of the user's upper body when the user sits, making it convenient for the user to push or rotate the handle portion 311. In some examples, when the support mechanism 90 is a platform on which the user stands, the handle portion 311 at least partially extends to the front and above of the standing platform to facilitate operation by the user when the user stands.

In this example, the display assembly 33 is at least disposed on the handle portion 311 of the first operating lever 31. It is to be understood that the position of the handle portion 311 of the first operating lever 31 is basically the forward-looking position when the user is driving the outdoor traveling device 100. The user basically does not need to turn the head or lower the head significantly, and the user's normal visual field can cover the display assembly 33 of the handle portion 311. In this example, the display assembly 33 is disposed at the end portion of the second end 31b, that is, the display assembly 33 is an end of the first operating lever 31. For example, the display assembly 33 is disposed on the handle portion 311 of the first operating lever 31, that is, the display assembly 33 is disposed at the second end 31b of the first operating lever 31, and the operating assembly 34 is also disposed on the handle portion 311 of the first operating lever 31, that is, the operating assembly 34 is also disposed at the second end 31b of the first operating lever 31. For example, the operating assembly 34 is disposed on the outer peripheral side of the display assembly 33 to facilitate wire harness arrangement. In some examples, the display assembly 33 is disposed on the handle portion 311 of the first operating lever 31, and the operating assembly 34 is disposed on a handle portion 321 of the second operating lever 32. The display assembly 33 and the operating assembly 34 that are disposed on the same component occupy a larger space. However, by setting the display assembly 33 and the operating assembly 34 separately, the space of the first operating lever 31 and the second operating lever 32 occupied by the display assembly 33 and the operating assembly 34 can be reduced. In some examples, the display assembly 33 is disposed on the handle portion 311 of the first operating lever 31, and the operating assembly 34 is disposed on the handle portion of the first operating lever 31 and/or the handle portion of the second operating lever 32, thereby facilitating user operation and reducing the occupied space of the first operating lever 31 and the second operating lever 32.

For example, the display assembly 33 includes at least a first display screen 331, the dimension of the first display screen 331 is greater than or equal to 1.5 inches, and the dimension of the first display screen 331 is greater than or equal to 30 mm * 22.5 mm. For example, the dimension of the first display screen 331 is greater than or equal to 35 mm * 26.5 mm. For example, the dimension of the first display screen 331 is greater than or equal to 35 mm * 20 mm. The dimension of the first display screen 331 is approximately equal to 2 inches, and the dimension of the first display screen 331 is approximately equal to 40 mm * 30 mm. The dimension of the first display screen 331 is approximately equal to 2 inches, and the dimension of the first display screen 331 is approximately equal to 45 mm * 25.3 mm. A sufficiently large display screen dimension makes it easier for the user to identify the prompt information. The first display screen with an increased dimension makes the display content richer, provides a better viewing effect for the user, and is less likely to be completely blocked by the user. For example, the first display screen 331 displays the operation state of the outdoor traveling device 100, and the operation state includes at least battery level display, the operating speed of the mowing assembly 80, the traveling speed of the traveling mechanism 40, the power output function, the illumination state, and the like. For example, the first display screen 331 may be a plasma display panel (PDP), a light-emitting diode (LED) display, an electroluminescence (EL) display, a vacuum fluorescent display (VFD), a thin-film transistor (TFT) display screen, a liquid-crystal display (LCD), or any other display device. The display manners of the operation state include, but are not limited to, text content display (for example, a low battery level), graphic or picture content display, digital content display, symbol content display, color content display, and other dynamic content display.

In some examples, the steering lever 312 may be a metal tube (or a tube made of other rigid materials) that includes at least a portion extending basically vertically (when mounted at the middle position) and the other portion extending basically horizontally. In some examples, the basically horizontally extending portion of the steering lever 312 may be considered to be or actually include a structure used as the handle portion 311 or a structure for connecting the handle portion 311. In some examples, the handle portion 311 may be made of a different material (for example, a softer material) that is more comfortable for the operator to hold. In some cases, the handle portion 311 may include textures or other features to enhance or improve the operator's grip feel.

The first operating lever 31 further includes a housing for accommodating the first display screen 331. For convenience of reference, the housing for accommodating the first display screen 331 is referred to as a display housing 313. The display housing 313 is formed on or connected to the first operating lever 31. For example, the display housing 313 includes a first housing 313a and a second housing 313b, the first housing 313a and the second housing 313b are separated in the front and rear direction, and the first housing 313a and the second housing 313b form a clamshell structure. For example, the first housing 313a and the second housing 313b are formed at the second end 31b of the first operating lever 31. For example, the first housing 313a and the second housing 313b are formed on the handle portion 311 of the first operating lever 31. For example, the first housing 313a and the second housing 313b form the display housing 313 and are then connected to the handle of the first operating lever 31.

The edge of the display housing 313 protrudes from the handle portion 311 in the radial direction of the handle portion 311. Optionally, the display housing 313 protrudes from the handle portion 311 on the outer circumferential side of the handle portion 311. The display housing 313 is provided with at least one plane, and the first display screen 331 is exposed from the preceding plane so that the display content is exposed to the outside. In this example, an upper surface 3131 of the display housing 313 is configured to be the preceding plane. A window 3132 is opened on the upper surface 3131 so that the display content of the first display screen 331 is exposed through the window 3132. For example, to facilitate user observation and avoid screen reflection, the upper surface 3131 is tilted relative to the horizontal plane, and the side of the upper surface 3131 adjacent to the user is lower than the other side of the upper surface 3131, that is, in the front and rear direction, the upper surface 3131 is tilted and extends upward.

In some examples, the operating assembly 34 includes switching elements 341 for receiving operation instructions representing the user's intention and sending corresponding signals or changing the states. For example, the switching element 341 includes at least one of a mechanical switch or an electronic switch. The mechanical switch includes a push switch (such as a button switch, a key switch, a membrane switch, or a rocker switch), a toggle switch (such as a gear switch, a lever switch, or a pull-rod switch), a rotary switch (such as a knob switch or a dial switch), and a microswitch. The electronic switch includes a sensor and a chip. According to different types of sensors, the electronic switch includes a touch switch (capacitive or resistive), a sensing switch (such as infrared sensing, microwave sensing, ultrasonic sensing, piezoelectric sensing, electromagnetic sensing, or capacitive sensing), a voice operated switch, and a wireless switch (connected to an external smart device).

In some examples, the operating assembly 34 includes multiple switching elements 341 representing different control functions. The outdoor traveling device 100 can be controlled by operating the operating assembly 34, including, but not limited to, the power output function, engine start and stop, and the traveling speed gear adjustment. The following may also be included: the mowing speed gear adjustment, the vehicle light adjustment, or turning off the first display screen 331. The multiple switching elements 341 may be one or more of the preceding switch types. For example, the operating assembly 34 includes a power take-off (PTO) switch 3411. The PTO switch is a push switch. The PTO switch 3411 is pressed to start or stop the mowing blade 81. The operating assembly 34 further includes a rotary switch 3412 for controlling the traveling gear adjustment of the traveling mechanism 40 or other combinations of the preceding switch types and other combinations of different control functions, which are not limited by the content of this example. For example, the operating assembly 34 is disposed on the outer peripheral side of the first display screen 331. For example, the operating assembly 34 is disposed on the lower side of the first display screen 331, or the operating assembly 34 is disposed on the right side of the first display screen 331. For example, the multiple switching elements 341 of the operating assembly 34 are disposed on the four sides of the first display screen 331, respectively. In this example, the operating assembly 34 is disposed on the display housing 313.

In some examples, the operating assembly 34 is disposed on the first display screen, that is, the first display screen is a touchscreen component, and the user can directly touch the corresponding position of the display screen so that the operating assembly 34 and the display assembly 33 are integrated on one display screen.

For example, the display housing 313 is fixedly connected to the first operating lever 31. In some alternative examples, the display housing 313 is rotatably connected to the first operating lever 31. Therefore, during the rotation of the first operating lever 31, the upper surface 3131 of the display housing 313 can always remain facing the user.

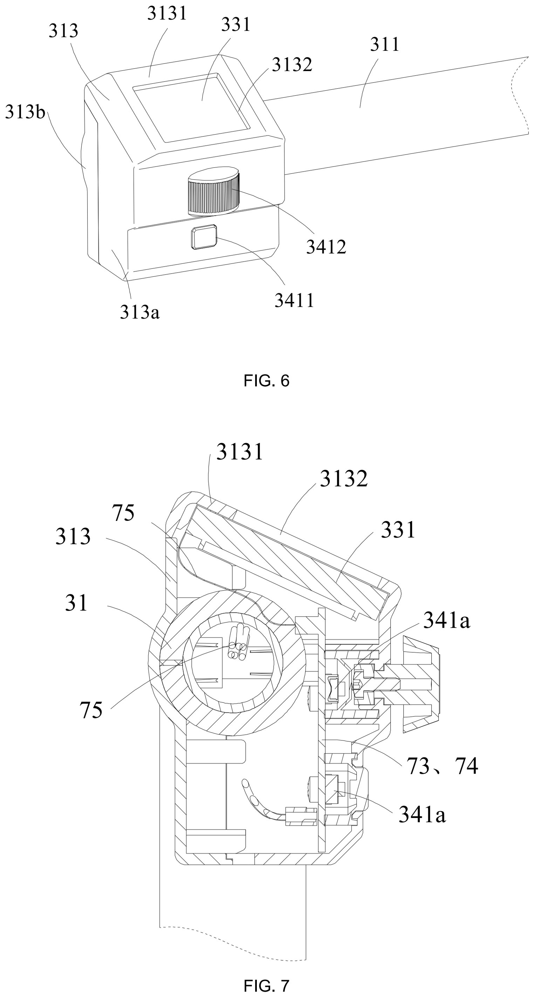

In this example, the outdoor traveling device 100 further includes a second controller 73, the display assembly 33 and the operating assembly 34 are separately connected to the second controller 73, and the second controller 73 is connected to the first controller 71. For example, the second controller 73 is disposed on a second circuit board 74. The second circuit board 74 is disposed inside the first operating lever 31. Optionally, the second circuit board 74 is disposed inside the display housing 313. For example, the second circuit board 74 is disposed below the first display screen 331, that is, the second circuit board 74 is disposed on the back of the first display screen 331, thereby facilitating wiring and installation. For example, the second controller 73 controls the display assembly 33 and transmits the input instruction of the operating assembly 34 to the first controller 71. The second circuit board 74 includes a PCB and an FPC board. As shown in FIG. 7, switch bodies 341a of the switching elements 341 are disposed on the plane of the second circuit board 74. For example, when the switching element 341 is a push switch, the position of the operating portion changes along the front and rear direction to cause the switch body to be engaged or disengaged (activated or deactivated), and the second circuit board 74 is provided along the up and down direction. In some alternative examples, when the switching element 341 is a push switch, the position of the operating portion changes along a direction perpendicular to the upper surface 3131 to cause the switch body to be engaged or disengaged (activated or deactivated), and the second circuit board 74 is provided along a direction parallel to the upper surface 3131. For example, the second circuit board 74 is connected to the first display screen 331 via a wired connection. Optionally, the second circuit board 74 is connected to the first display screen 331 via a cable 75. For example, the second circuit board 74 is connected to the first controller 71 via the cable 75, and the cable 75 passes through the first operating lever 31 to connect the second controller 73 to the first controller 71. For example, the first operating lever 31 is hollow, and the cable 75 is connected to the first controller 71 via the hollow portion. Optionally, the cable 75 includes a spiral portion so that when the position of the first operating lever 31 changes, the length of the cable 75 can change according to the position of the first operating lever 31. In this manner, it can be ensured that the cable 75 does not get tangled in the first operating lever 31, thereby avoiding the following: the cable 75 is too long, accumulated, and worn, or the cable 75 is too short and pulled.

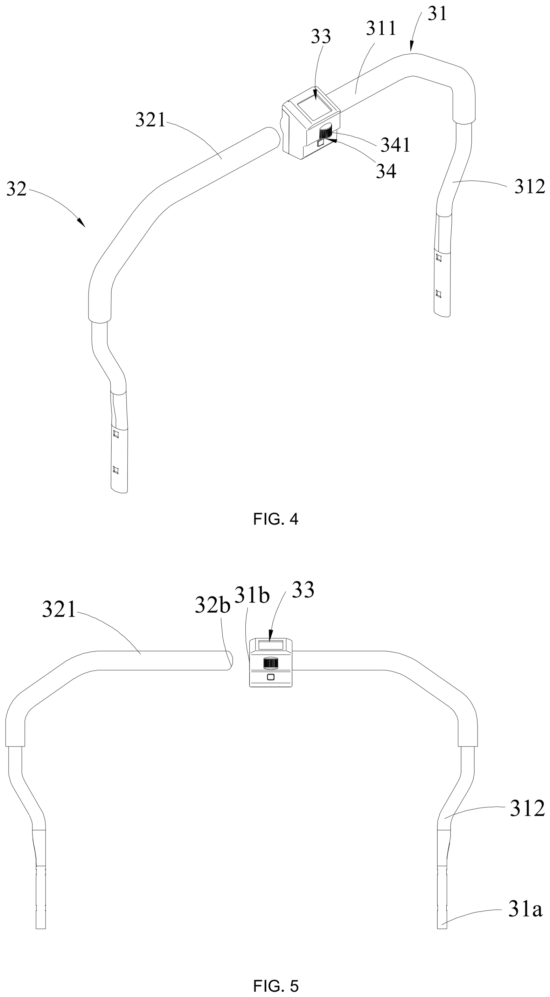

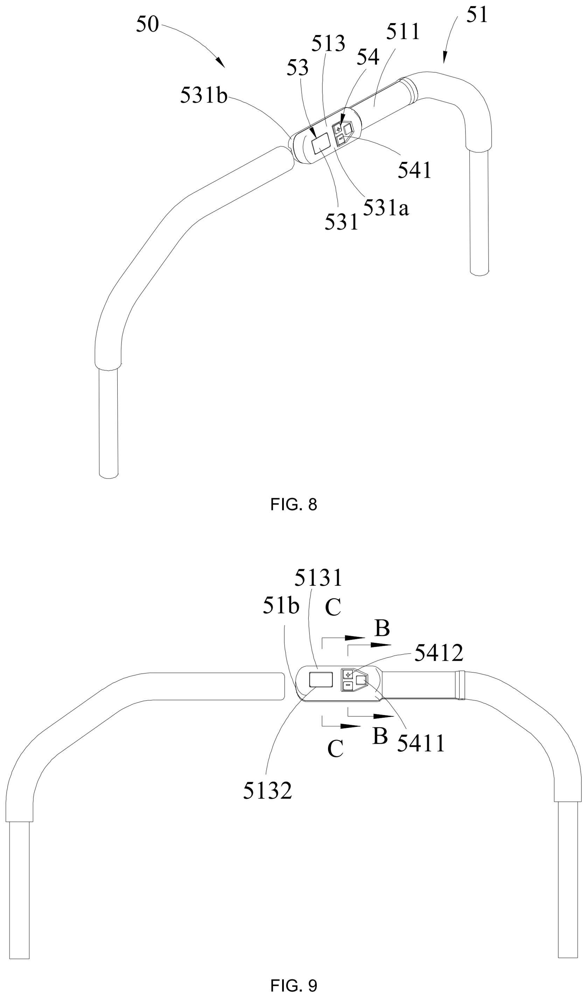

Another operating mechanism 50 is shown in the example in FIGS. 8 to 10B. The operating assembly is similar to the operating assembly 34 shown in FIGS. 4 to 7. The following description mainly focuses on the differences between the operating mechanism 50 and the operating mechanism 30. Components that are the same or have similar core structures share the same reference numerals.

A first operating lever 51 further includes a housing for accommodating a first display screen 531. For convenience of reference, the housing for accommodating the first display screen 531 is referred to as a display housing 513. The display housing 513 is formed on or connected to the first operating lever 51. For example, the display housing 513 includes a first housing 513a and a second housing 513b, the first housing 513a and the second housing 513b are separated in the front and rear direction, and the first housing 513a and the second housing 513b form a clamshell structure. For example, the first housing 513a and the second housing 513b are formed at a second end 51b of the first operating lever 51. For example, the first housing 513a and the second housing 513b are formed on a handle portion 511 of the first operating lever 51. For example, the first housing 513a and the second housing 513b form the display housing 513 and are then connected to the handle of the first operating lever 51.

In the radial direction of the handle portion 511, the edge of the display housing 513 protrudes from the handle portion 511. Optionally, the display housing 513 protrudes from the handle portion 511 on the outer circumferential side of the handle portion 511. The display housing 513 is provided with at least one plane, and the first display screen 531 is exposed from the preceding plane so that the display content is exposed to the outside. In this example, an upper surface 5131 of the display housing 513 is configured to be the preceding plane. A window 5132 is opened on the upper surface 5131 so that the display content of the first display screen 531 is exposed through the window 5132. For example, to facilitate user observation and avoid screen reflection, the upper surface 5131 is tilted relative to the horizontal plane, and the side of the upper surface 5131 adjacent to the user is lower than the other side of the upper surface 5131, that is, in the front and rear direction, the upper surface 5131 is tilted and extends upward.

In some examples, an operating assembly 54 includes switching elements 541 for receiving operation instructions representing the user's intention and sending corresponding signals or changing the states. For example, the switching element 541 includes at least one of a mechanical switch or an electronic switch. The mechanical switch includes a push switch (such as a button switch, a key switch, a membrane switch, or a rocker switch), a toggle switch (such as a gear switch, a lever switch, or a pull-rod switch), a rotary switch (such as a knob switch or a dial switch), and a microswitch. The electronic switch includes a sensor and a chip. According to different types of sensors, the electronic switch includes a touch switch (capacitive or resistive), a sensing switch (such as infrared sensing, microwave sensing, ultrasonic sensing, piezoelectric sensing, electromagnetic sensing, or capacitive sensing), a voice operated switch, and a wireless switch (connected to an external smart device).

In some examples, the operating assembly 54 includes multiple switching elements 541 representing different control functions. The outdoor traveling device 100 can be controlled by operating the operating assembly 54, including, but not limited to, the power output function, engine start and stop, and the traveling speed gear adjustment. The following may also be included: the mowing speed gear adjustment, the vehicle light adjustment, or turning off the first display screen 531. The multiple switching elements 541 may be one or more of the preceding switch types. For example, the operating assembly 54 includes a PTO switch 5411. The PTO switch is a push switch. The PTO switch 5411 is pressed to start or stop the mowing blade 81. The operating assembly 54 further includes a push switch 5412 for controlling the traveling gear adjustment of the traveling mechanism 40, and the push switch 5412 includes a "+" button for an upshift and a "-" button for a downshift. Alternatively, other combinations of the preceding switch types and other combinations of different control functions are included, which are not limited by the content of this example.

For example, the operating assembly 54 is disposed on the outer peripheral side of the first display screen 531. For example, the operating assembly 54 is disposed on the lower side of the first display screen 531, or the operating assembly 54 is disposed on the right side of the first display screen 531. For example, the multiple switching elements 541 of the operating assembly 54 are disposed on the four sides of the first display screen 531, respectively. In this example, the operating assembly 54 is disposed on the display housing 513, and the switching elements 541 are disposed on the right side of the first display screen 531.

In some examples, the operating assembly 54 is disposed on the first display screen, that is, the first display screen is a touchscreen component, and the user can directly touch the corresponding position of the display screen so that the operating assembly 54 and the display assembly 33 are integrated on one display screen.

For example, the display housing 513 is fixedly connected to the first operating lever 51. In some alternative examples, the display housing 513 is rotatably connected to the first operating lever 51. Therefore, during the rotation of the first operating lever 51, the upper surface 5131 of the display housing 513 can always remain facing the user.

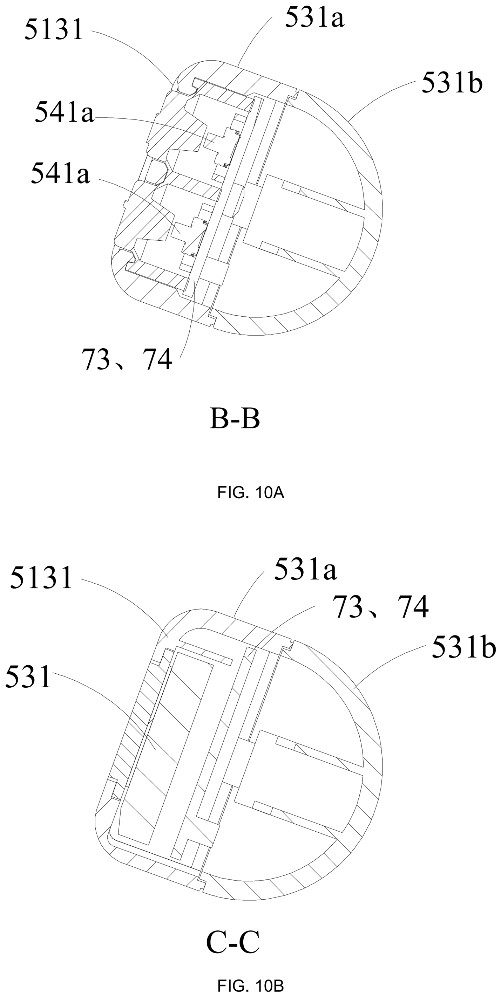

In this example, the outdoor traveling device 100 further includes the second controller 73, the display assembly 33 and the operating assembly 54 are separately connected to the second controller 73, and the second controller 73 is connected to the first controller 71. For example, the second controller 73 is disposed on the second circuit board 74. The second circuit board 74 is disposed inside the first operating lever 51. Optionally, the second circuit board 74 is disposed inside the display housing 513. For example, the second circuit board 74 is disposed below the first display screen 531, that is, the second circuit board 74 is disposed on the back of the first display screen 531, thereby facilitating wiring and installation. For example, the second controller 73 controls a display assembly 53 and transmits the input instruction of the operating assembly 54 to the first controller 71. The second circuit board 74 includes a PCB and an FPC board. As shown in FIG. 10A, switch bodies 541a of the switching elements 541 are disposed on the plane of the second circuit board 74. For example, when the switching element 541 is a push switch, the position of the operating portion changes along the front and rear direction to cause the switch body to be engaged or disengaged (activated or deactivated), and the second circuit board 74 is provided along the up and down direction. In some alternative examples, when the switching element 541 is a push switch, the position of the operating portion changes along a direction perpendicular to the upper surface 5131 to cause the switch body to be engaged or disengaged (activated or deactivated), and the second circuit board 74 is provided along a direction parallel to the upper surface 5131. For example, the second circuit board 74 is connected to the first display screen 531 via a wired connection. Optionally, the second circuit board 74 is connected to the first display screen 531 via a cable. For example, the second circuit board 74 is connected to the first controller 71 via the cable, and the cable passes through the first operating lever 51 to connect the second controller 73 to the first controller 71. For example, the first operating lever 51 is hollow, and the cable is connected to the first controller 71 via the hollow portion. Optionally, the cable includes a spiral portion so that when the position of the first operating lever 51 changes, the length of the cable can change according to the position of the first operating lever 51. In this manner, it can be ensured that the cable does not get tangled in the first operating lever 51, thereby avoiding the following: the cable is too long, accumulated, and worn, or the cable is too short and pulled.

When the support mechanism 90 in the outdoor traveling device 100 is the seat 91, the outdoor traveling device 100 includes a master control console 60 located beside the seat 91 (on one side or the other side of the seat 91). For example, the master control console 60 is located on the right side of the seat 91. In some examples, for people who are accustomed to the left side, the master control console 60 is located on the left side of the seat 91, which does not affect the substantive content of the present application. When the support mechanism 90 in the outdoor traveling device 100 is a standing platform, the master control console 60 is disposed above the standing platform. For example, the master control console 60 is disposed on the lower side of the operating mechanism 30.

The master control console 60 includes a master control display screen 61 and a master control switch assembly 62. The master control display screen 61 includes a master control display interface 611 that can display at least the operation state of the outdoor traveling device 100, and the master control switch assembly 62 can at least control the operation state of the outdoor traveling device 100 when operated by the user. The operation state of the outdoor traveling device 100 is represented by device parameters, component state, and fault information of the outdoor traveling device 100. In this example, the master control display screen 61 and the master control switch assembly 62 are disposed on the vehicle frame 11 and are separated from the operating mechanism 30. That is, the outdoor traveling device 100 has two control components at different positions and with related functions. The outdoor traveling device 100 can be controlled by operating the master control switch assembly 62, including, but not limited to, the power output function, engine start and stop, turning on or off the master control display screen 61, the working mode adjustment, the traveling speed gear adjustment, the mowing speed gear adjustment, and the illumination device adjustment.

In this example, at least some of the functions of the operating assembly 34 are the same as those of the master control switch assembly 62, such as the power output function, engine start and stop, and the traveling speed gear adjustment. Optionally, the master control display screen 61 responds to the operation instruction of the operating assembly 34 to display information on the master control display screen 61. Similarly, the first display screen 331 also responds to the operation instruction of the master control switch assembly 62 to display information on the first display screen 331. For example, both the operating assembly 34 and the master control switch assembly 62 can control the traveling speed gear. When the user uses the master control switch assembly 62 to adjust the traveling speed gear to the "3" gear, the first controller 71 responds to the input instruction of the master control switch assembly 62 to control the maximum traveling speed of the traveling mechanism 40 within the speed range of the "3" gear. The traveling speed gear of the master control display screen 61 is displayed as the "3" gear, and the traveling speed gear of the first display screen 331 is displayed as the "3" gear. Afterwards, if the user uses the operating assembly 34 to adjust the traveling speed gear, the adjustment starts from the "3" gear. That is, even if the first controller 71 receives an upshift signal or a downshift signal from the operating assembly 34, the upshift or downshift is performed based on the "3" gear, and the maximum traveling speed of the traveling mechanism 40 is controlled with the gear after the upshift or downshift based on the "3" gear.

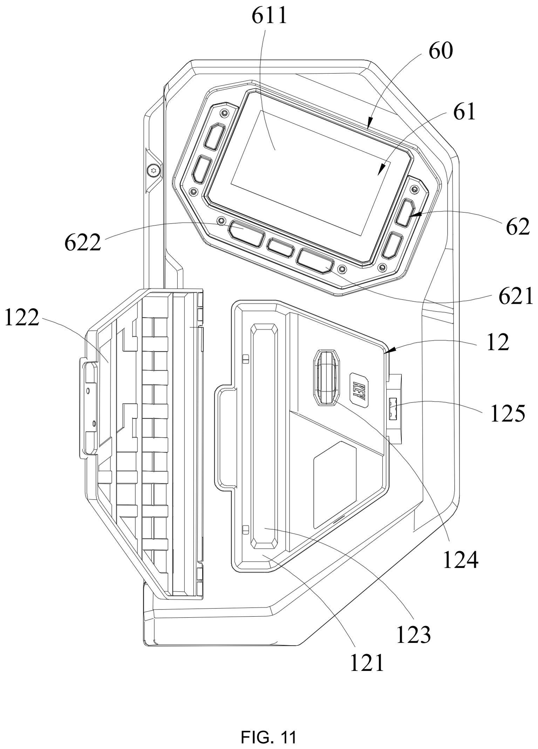

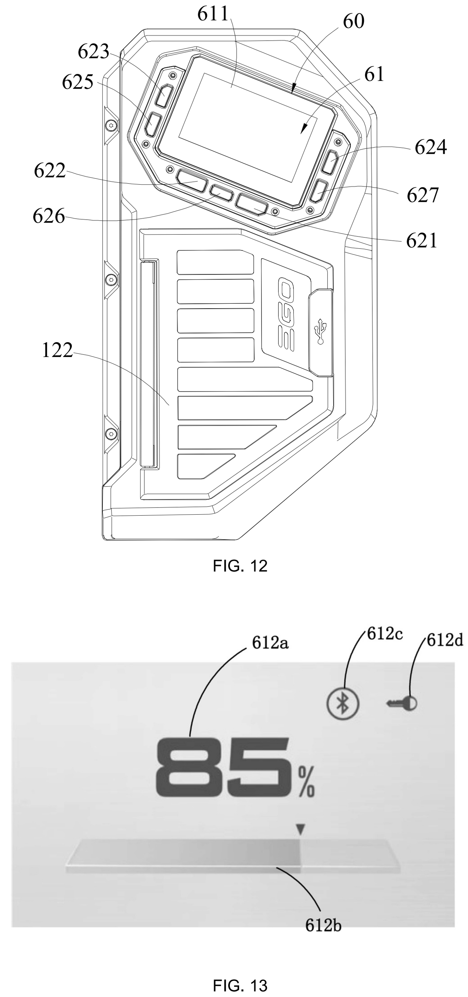

As shown in FIGS. 11 and 12, the master control switch assembly 62 includes physical switches. Multiple physical switches are arranged on the periphery of the master control display screen 61 to adjust some or all functions or properties of the outdoor traveling device 100. For example, the physical switches are independently provided outside the master control display screen 61, rather than virtual buttons that work via touch within the master control display screen 61. The physical switch includes at least one of a mechanical switch or an electronic switch. The mechanical switch includes a push switch (such as a button switch, a key switch, a membrane switch, or a rocker switch), a toggle switch (such as a gear switch, a lever switch, or a pull-rod switch), a rotary switch (such as a knob switch or a dial switch), and a microswitch. The electronic switch includes a sensor and a chip. According to different types of sensors, the electronic switch includes a touch switch (capacitive or resistive), a sensing switch (such as infrared sensing, microwave sensing, ultrasonic sensing, piezoelectric sensing, electromagnetic sensing, or capacitive sensing), a voice operated switch, and a wireless switch (connected to an external smart device).

For example, a PTO switch 621 is disposed on a side of the master control display screen 61, the PTO switch 621 is a push switch, and the PTO switch 621 is pressed to start or stop the mowing blade 81. Optionally, a long press (continuous pressing for more than a preset time) of the PTO switch 621 starts the rotation of the mowing blade 81, and a short press (a touch or pressing for less than a preset time) of the PTO switch 621 stops the rotation of the mowing blade 81. If the push switch is pressed continuously for 2s or longer, it is considered a long press; and if the push switch is pressed for less than 2s, it is considered a short press. For example, a start switch 622 is disposed on a side of the master control display screen 61, and the start switch 622 is configured to put the outdoor traveling device 100 into a standby state. Optionally, the start switch 622 is further configured to control the master control display screen 61 to be turned on or off. For example, the start switch 622 is a push switch. For example, the start switch 622 and the PTO switch 621 are located on the same side of the master control display screen 61, and the start switch 622, the PTO switch 621, and the master control display screen 61 are integrated.

With continued reference to FIGS. 11 and 12, a first storage box 12 is located on the right side of the seat 91, and the first storage box 12 is disposed on a side of the master control console 60 facing the backrest of the seat 91. The first storage box 12 includes a box body 121 and a box cover 122. The box body 121 encloses a first accommodation space 123, and the box cover 122 is rotatably connected to the box body 121. For example, the first accommodation space 123 is used for storing a mobile phone or other sundries. A keyhole 124 for inserting a key is further provided in the box body 121. When the key is inserted into the keyhole 124, the switch located in the keyhole 124 can be activated. In other words, when the key is inserted into the keyhole 124, the switch located in the keyhole 124 can be activated without turning the key, thereby facilitating user operation. In this example, the keyhole 124 is disposed in the box body 121. When the box cover 122 closes the box body 121 to form a basically sealed box body structure of the first storage box 12, the keyhole 124 is also enclosed in the box body 121, thereby achieving dustproof and waterproof properties for the keyhole 124. Optionally, the first storage box 12 further includes a biasing element for biasing the box cover 122 to move so that the box body 121 can be closed. The biasing element is a torsion spring connected between the box body 121 and the box cover 122. The box body 121 further includes a charging port 125. For example, the charging port 125 includes a Universal Serial Bus (USB) port, such as Type-A, Type-B, Type-C, MiniUSB, or MicroUSB. In this example, when the box cover 122 closes the box body 121, the box cover 122 also seals the charging port 125 to achieve dustproof and waterproof properties for the charging port 125. In some examples, the charging port 125 is provided with a separate sealing cover, which is separated from the box cover 122 and does not need to be associated with the opening or closing of the box cover 122. The keyhole 124 and the charging port 125 are disposed in the box body 121 of the first storage box 12 so that the space is more compact and the appearance is neater.

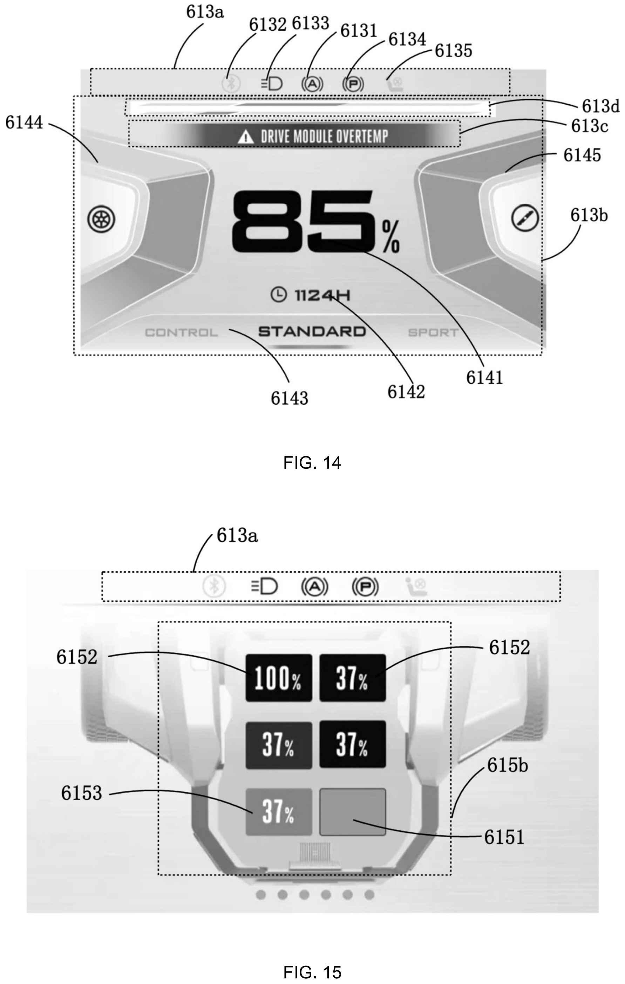

In this example, after the key is inserted into the keyhole 124, the start switch 622 is operated in the first operating manner, and the master control display screen 61 is turned on and enters the startup animation demonstration mode. After the startup animation is loaded, the outdoor traveling device 100 is powered on. As shown in FIG. 14, the master control display interface 611 of the master control display screen 61 enters the "homepage" mode. After the key is inserted into the keyhole 124, the start switch 622 is operated in the second operating manner, the master control display screen 61 is turned on, and the master control display interface 611 enters the "standby" interface; when the start switch 622 is operated in the first operating manner, the master control display screen 61 enters the startup animation demonstration mode; after the startup animation is loaded, the outdoor traveling device 100 is powered on, and the master control display interface 611 of the master control display screen 61 enters the "homepage" mode. When the master control display screen 61 displays the "standby" interface, the start switch 622 is operated again in the second operating manner, and the master control display screen 61 is turned off. For example, the start switch 622 may be a touch switch. For example, the first operating manner is to continuously operate the start switch 622 for more than a preset time, such as 2s. The second operating manner is a touch, or the operating duration in the second operating manner is less than a preset time, such as 2s. Optionally, when the master control display screen 61 displays the "standby" interface, if no instruction is inputted to the outdoor traveling device 100 for more than a preset period (for example, 5min), the master control display screen 61 is turned off. Optionally, after the outdoor traveling device 100 is powered on, if the user leaves the support mechanism 90 and no instruction is inputted to the outdoor traveling device 100 for more than a preset period (for example, 1h), the master control display screen 61 is turned off and the outdoor traveling device 100 shuts down. The input instruction may come from the master control switch assembly 62, the operating assembly 34, the first operating lever 31, the second operating lever 32, and other components that can receive the input instruction from the user and output the corresponding signal.

As shown in FIGS. 11 and 12, the master control switch assembly 62 further includes a traveling gear adjustment button 623, a mowing gear adjustment button 624, a mode adjustment button 625, an illumination setting button 626, and a switching button 627. The traveling gear adjustment button 623 allows the user to select between two or more traveling gear modes, for example, the first gear, the second gear, the third gear, and the fourth gear, and for another example, the L gear, the M gear, the H gear, and the T gear. Optionally, the same operating manner may be adopted in different gear switching processes, or a different operating manner may be adopted when switching between specific gears compared to when switching between other gears. The mowing gear adjustment button 624 allows the user to select between two or more mowing gear modes, for example, the first gear, the second gear, the third gear, and the fourth gear, and for another example, the economic gear, the light-load gear, and the heavy-load gear. Optionally, the same operating manner may be adopted in different gear switching processes, or a different operating manner may be adopted when switching between specific gears compared to when switching between other gears. The mode adjustment button 625 allows the user to select between two or more working modes, for example, a control mode, a standard mode, and a sport mode. Different working modes correspond to different preset parameters of the outdoor traveling device 100. The illumination setting button 626 is operated by the user to control the illumination function of the outdoor traveling device 100, for example, turning the vehicle light on and off. The vehicle light may include one or more of the headlights, taillights, underglow lights, accessory lights, and backlights. The switching button 627 allows the user to operate to switch between the display pages. The master control display interface 611 of the master control display screen 61 includes the homepage interface/power information interface/operation history interface/machine state interface/language setting interface/version information interface, and each of at least some of the display interfaces has a secondary page. For example, the homepage interface, the language setting interface, and at least some of the display interfaces are configured to display parameters. For example, the parameter display in the power information interface, the version information interface, and at least some of the display interfaces can be operated and reset. For example, the operation history interface displays at least the total traveling time, the total mowing time, and the current accumulated usage time of the blade. The current accumulated usage time of the blade can be reset by operation. For example, a reset operation button is provided. For example, the reset operation button for the current accumulated usage time of the blade is integrated with the mowing gear adjustment button 624, and the selection operation between the mowing gear modes and the reset operation are distinguished through different operating manners.

For example, the outdoor traveling device 100 with "E-STEER^{™}" technology further has a constant-speed cruise driving mode. Optionally, the master control switch assembly 62 further has a constant speed cruise button for starting and canceling the constant-speed cruise driving mode. In this example, the constant speed cruise button is integrated with the switching button 627, and display page switching and constant-speed cruise mode switching are distinguished through different operating manners.

For example, the master control switch assembly 62 further includes a control button that can activate and deactivate a wireless communication transceiver, such as Bluetooth, allowing the master control display screen 61 and/or the display assembly 33 to communicate with applications corresponding to other external devices, such as a smartphone, a tablet computer, and a smart wearable device. For example, the control button for the wireless communication transceiver is integrated with the illumination setting button 626, and the control of the illumination function of the outdoor traveling device 100 and the control of the wireless communication transceiver are distinguished through different operating manners.

The master control display screen 61 may be a display device formed based on any type of display screen. For example, the master control display screen 61 may be a PDP, an LED display, an EL display, a VFD, a TFT display screen, an LCD, or any other display device.

As shown in FIG. 13, the exemplary content of the "standby" interface (the master control display interface 611) is shown, including the display of a battery level value 612a, a battery level indicator bar 612b, a Bluetooth status icon 612c, and a key status icon 612d.

As shown in FIG. 14, the exemplary content of the "homepage" interface (the master control display interface 611) is shown, including a status information bar 613a, a display region 613b, and an abnormality alarm region 613c. The status information bar 613a is disposed at the top of the display interface 611, and the status information bar 613a displays the following: the constant speed cruise state, the Bluetooth state 6132, the light state 6133, the mechanical parking state 6134, the hill parking state 6131, the operator's presence state 6135, and the wireless network state. The display region 613b is the main display region and occupies the largest space in the master control display interface 611. The display content of the display region 613b includes the battery level value 6141, the total traveling time 6142, the working mode, the current working mode information 6143, the traveling gear, the current traveling gear information 6144, the mowing gear, and the current mowing gear information 6145, and the current information is represented by lighting, different display states, different display colors, or special markings. The abnormality alarm region 613c is disposed in the display region 613b and below the status information bar 613a. When a fault or abnormality occurs, a reminder banner is displayed. To more easily attract the user's attention, the reminder banner is displayed in red font. The abnormality alarm region 613c displays the following content: the number of pieces of fault information and the content of the fault or abnormality information (for example, too high an electric motor temperature or too low a battery level). In some examples, a pop-up window is displayed when a fault or abnormality occurs, and the pop-up window basically covers the display region 613b to issue an abnormality reminder.

In some examples, the "homepage" interface further includes a power display region 613d to display the current power of the whole machine. For example, in the power display region 613d, a power bar is used to represent the power. The current power is represented by lighting, different display states, different display colors, or special markings, and the other part represents the energy recovery state. In this example, the power display region 613d is provided between the abnormality alarm region 613c and the status information bar 613a.

As shown in FIG. 15, the exemplary content of the "power information interface" (the master control display interface 611) is shown, including the status information bar 613a and a battery pack state display region 615b. The status information bar 613a in the "power information interface" has the same content as the status information bar 613a in the "homepage" interface. The battery pack state display region 615b displays the remaining power in each battery compartment, and the battery level value in the "homepage" interface represents the total remaining power of all battery packs. The battery pack state display region 615b in the "power information interface" clearly displays the remaining power in each battery compartment, making it convenient for the user to replace the corresponding low-power battery pack in time. In this example, the outdoor traveling device 100 includes six battery compartments, an "empty compartment" state 6151 is displayed for the battery compartment in which the battery pack is not mounted, and the corresponding remaining power 6152 of the battery pack is displayed for the battery compartment in which the battery pack is mounted. For example, when a battery pack fails, a corresponding fault prompt 6153 is issued, such as a color mark, a text prompt, or an icon prompt. For example, when the outdoor traveling device 100 does not satisfy the requirement for the minimum number of working batteries (for example, when the number of battery packs is less than 5) and the user attempts to drive the outdoor traveling device 100 or start the mowing assembly 80, the "power information interface" pops up, and the empty battery compartments in the "power information interface" flash to remind the user to insert the battery packs.

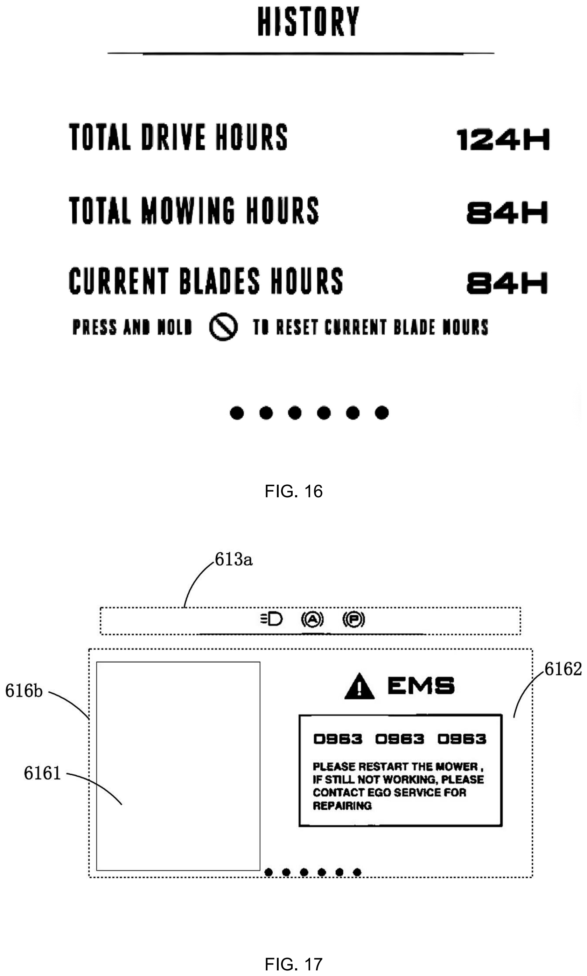

As shown in FIG. 16, the exemplary content of the "operation history interface" (the master control display interface 611) includes the total traveling time, the total mowing time, and the current accumulated usage time of the blade. As described above, the current accumulated usage time of the blade may be reset by operating the mowing gear adjustment button 624. The accumulated usage time of the blade is cleared to zero. Timing is restarted after the user replaces the blade.

As shown in FIG. 17, the exemplary content of the "machine state interface" (the master control display interface 611) is shown, including the status information bar 613a and a whole machine state display region 616b. The status information bar 613a in the "machine state interface" has the same content as the status information bar 613a in the "homepage" interface. The whole machine state display region 616b includes a whole machine icon display 6161 and a state display 6162. The state display 6162 includes that all modules are available, as well as a fault code and a description and solution of a corresponding fault when the fault occurs. The display forms include, but are not limited to, the text description, the icon display, and the like.

In the "language setting interface" (the master control display interface 611), the system language is set by operating some buttons of the master control switch assembly 62. The "version information interface" (the master control display interface 611) is configured to display the machine version, and the display forms include, but are not limited to, the text description, the icon display, and the like.

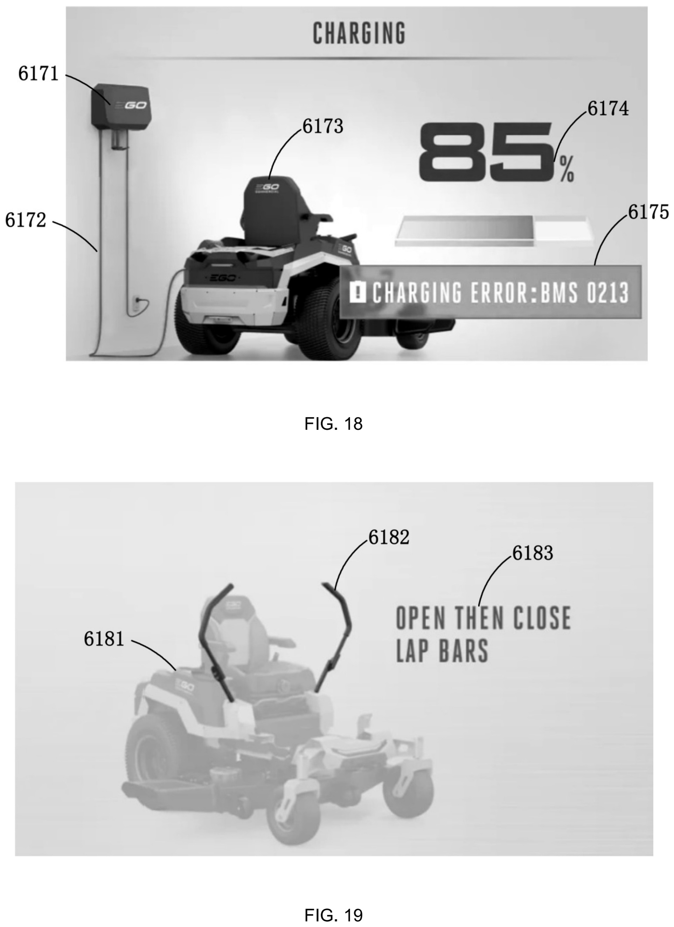

When the outdoor traveling device 100 is charged, the master control display interface 611 is configured to enter the "charging interface". As shown in FIG. 18, the exemplary content of the "charging interface" (the master control display interface 611) is shown, including the charging station display 6171, the cable state 6172, the whole machine icon display 6173, the current battery level value display and battery level progress bar 6174, and the fault display 6175. Different charging states are distinguished by different color displays, dynamic animation displays, and text or digital displays, and the charging states include charging in progress, fully charged, charging gun plugged in but not charging, and fault display. The fault display includes at least the fault code or the abnormal information content code.

In some examples, when the startup condition for the outdoor traveling device 100 is not satisfied and the user attempts to drive the outdoor traveling device 100 or start the mowing assembly 80, the "startup-condition-not-satisfied interface" automatically pops up. It is to be understood that the startup-condition-not-satisfied interface is pop-up window information. As shown in FIG. 19, the exemplary content of the "startup-condition-not-satisfied interface" (the master control display interface 611) is shown, including the whole machine icon display 6181, the not-satisfying-condition component prompt 6182, the description and solution 6183 of a corresponding fault, and the like.

In some examples, the outdoor traveling device 100 has a calibration mode in which leveling settings are performed on the whole machine. When the master control display screen 61 is a preset interface, the "calibration" interface is displayed through a preset operation, and the outdoor traveling device 100 is calibrated by adjusting the left and right leveling buttons. For example, when the master control display screen 61 is the "standby" interface, the "calibration" interface is displayed by operating the mode adjustment button 625 and the switching button 627 simultaneously. Optionally, the traveling gear adjustment button 623 and the mowing gear adjustment button 624 represent calibration on the left side and calibration on the right side. It is to be understood that the preceding operating manner is an example, and other operating manners and operating combinations may be included.

In some examples, the master control display interface 611 is further configured to display other working states of the outdoor traveling device 100, such as the reversing state, the driving adjustment preparation completion state, the "go home" prompt state of the outdoor traveling device 100, and the firmware version upgrade.

In some examples, the master control display screen 61 may be configured to be a touchscreen, and some functions of the master control switch assembly 62 may be implemented using virtual buttons. For example, the virtual buttons can only be enabled when the traveling speed is less than a preset speed. When the traveling speed is greater than the preset speed, the virtual buttons are disabled, and the functions can be adjusted only through the physical switches of the master control switch assembly 62. In this manner, the driving safety of the outdoor traveling device can be ensured.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A manned mower (100), comprising:
a vehicle frame (11);
a traveling mechanism (40) mounted to the vehicle frame and comprising a first drive wheel (411R) and a second drive wheel (411L);
a mowing assembly (80) comprising a mowing blade (81) and connected to the vehicle frame;
a controller (71) for controlling at least the traveling mechanism; and
an operating mechanism (30) comprising a first operating lever (31, 51) and a second operating lever (32), wherein the first operating lever and the second operating lever are operable to control the first drive wheel and the second drive wheel, respectively, and each of the first operating lever and the second operating lever is provided with a handle portion (311, 511);
wherein the operating mechanism further comprises a display assembly (33, 53) and an operating assembly (34, 54), the display assembly is at least disposed on the handle portion of the first operating lever and displays at least an operation state of the manned mower, the operating assembly is operated to enable the controller to receive an operation instruction from a user, and the operating assembly is at least disposed on the first operating lever or the second operating lever.

2. The manned mower of claim 1, further comprising:
a master control display screen (61) comprising a master control display interface (611) that displays at least a working state of the manned mower; and
a master control switch assembly (62) used for controlling at least the working state of the manned mower when the master control switch assembly is operated;
wherein the master control display screen and the master control switch assembly are disposed on the vehicle frame and are independent of the operating mechanism.

3. The manned mower of claim 2, wherein control functions of the operating assembly and control functions of the master control switch assembly are at least partially the same.

4. The manned mower of claim 2, wherein the master control display screen responds to the operation instruction of the operating assembly to display corresponding information on the master control display interface.

5. The manned mower of claim 1, wherein the first operating lever comprises a first end (31a) adjacent to the traveling mechanism and a second end (31b) opposite to the first end, the handle portion is disposed near the second end, and the display assembly is disposed at an end portion of the second end.

6. The manned mower of claim 5, wherein the operating assembly is disposed at the second end.

7. The manned mower of claim 6, wherein the operating assembly is disposed on an outer peripheral side of the display assembly.

8. The manned mower of claim 1, further comprising a second controller (73), wherein the display assembly and the operating assembly are separately connected to the second controller, and the second controller is connected to the controller.

9. The manned mower of claim 8, wherein the second controller is disposed in the first operating lever, and the second controller is connected to the controller via a cable (75).

10. The manned mower of claim 9, wherein the cable passes through the first operating lever to connect the second controller to the controller.

11. The manned mower of claim 1, further comprising a support mechanism (90) for supporting the user, wherein the support mechanism is mounted on the vehicle frame, and the display assembly is disposed in front of and/or above the support mechanism.

12. The manned mower of claim 1, wherein the display assembly comprises a first display screen (331, 531), and a dimension of the first display screen is greater than or equal to 1.5 inches.

13. The manned mower of claim 12, wherein the first operating lever further comprises a display housing (313, 513) for accommodating the first display screen, the display housing is formed on or connected to the first operating lever, and an edge of the display housing protrudes from the handle portion in a radial direction of the handle portion.

14. The manned mower of claim 13, wherein the display housing comprises a first housing (313a, 513a) and a second housing (313b, 513b) that are separated in a front and rear direction.

15. The manned mower of claim 1, wherein the first operating lever and the second operating lever independently control steering of the first drive wheel and the second drive wheel, respectively.
